# EUROPÄISCHE PATENTSCHRIFT

(11) **EP 0 864 734 B1**
(45) Veröffentlichungstag und Bekanntmachung des Hinweises auf die Patenterteilung: **12.09.2001**
(21) Anmeldenummer: 98890070.0
(22) Anmeldetag: 12.03.1998
(51) Int. Cl.: F02B 1/10, F02B 17/00

(54) **Verfahren zur Einbringung von Kraftstoff in den Brennraum einer direkteinspritzenden Otto-Brennkraftmaschine**
Method of feeding fuel into the combustion chamber of a direct injection spark ignited engine
Procédé pour alimenter en carburant la chambre de combustion d'un moteur à injection directe et à allumage commandé

(30) Priorität: 14.03.1997 AT 16097 U
(43) Veröffentlichungstag der Anmeldung: 16.09.1998
(73) Patentinhaber: AVL List GmbH, 8020 Graz (AT)
(72) Erfinder: Piock, Walter, Dr., 8151 Hitzendorf (AT); Wirth, Martin, Dipl.-Ing. Dr., 8151 Hitzendorf (AT)
(74) Vertreter: Babeluk, Michael, Dipl.-Ing. Mag.

(56) Entgegenhaltungen:
- EP-A- 0 824 188
- EP-A- 0 856 655
- US-A- 5 483 934
- PATENT ABSTRACTS OF JAPAN vol. 016, no. 498 (M-1325), 15. Oktober 1992 & JP 04 183924 A (TOYOTA MOTOR CORP), 30. Juni 1992
- PATENT ABSTRACTS OF JAPAN vol. 009, no. 191 (M-402), 7. August 1985 & JP 60 056146 A (NISSAN JIDOSHA KK), 1. April 1985

## Beschreibung

Die Erfindung betrifft ein Verfahren zur Einbringung von Kraftstoff in den Brennraum einer im Teillastbetrieb gedrosselten direkteinspritzenden Otto-Brennkraftmaschine.

Bekannte Konzepte für die Otto-Direkteinspritzung lassen sich hinsichtlich der Gemischaufbereitung in zwei Gruppen unterteilen. Die eine Gruppe bilden auf homogenen Betrieb ausgelegte Otto-Direkteinspritzsysteme, welche vor allem das gegenüber der Saugrohreinspritzung verbesserte Vollastpotential ausnützen. Dieses sehr einfache Verbrennungskonzept eignet sich sehr gut zur Erfüllung schärfster Emissionsvorschriften bei gleichzeitigem nur geringem Verbrauchsvorteil. Die andere Gruppe von Otto-Direkteinspritzsystemen ist auf inhomogenen bzw. geschichteten Betrieb ausgelegt, was Grundvoraussetzung ist für eine weitgehende Entdrosselung im Teillastbereich und den dadurch erreichbaren deutlichen Verbrauchsvorteilen. Otto-Brennkraftmaschinen mit Ladungsschichtung sind beispielsweise aus der EP 0 598 941 B1 oder der EP 0 741 237 A1 bekannt.

Zum Unterschied zu direkteinspritzenden Dieselmotoren, wo die Kraftstoffeinspritzung unmittelbar vor der Verbrennung erfolgt, ist bei direkteinspritzenden Otto-Brennkraftmaschinen zur Ausbildung eines zündfähigen Gemisches im Brennraum ein früherer Einspritzzeitpunkt notwendig, um Kraftstofftransport und Aufbereitung sicherzustellen.

So liegt der Beginn der Kraftstoff-Einspritzung bei gedrosselten Brennkraftmaschinen mit direkter Einspritzung der eingangs genannten Art bei etwa 320° bis 250° Kurbelwinkel vor dem oberen Totpunkt. Dadurch kann bei betriebswarmen Motor eine ausreichende Homogenisierung im Brennraum erzeugt werden, was Voraussetzung ist, um Emissionswerte zu erreichen, die mit den Emissionen aus konventionellem Betrieb mit Saugrohreinspritzung vergleichbar sind. Nachteilig ist allerdings, daß insbesondere während der Start- und Warmlaufphase wie bei Saugrohreinspritzmotoren relativ hohe Kohlenwasserstoffemissionen auftreten. Durch Spätverstellung der Zündung während dieser Phase gelingt es die HC-Emissionen im Bereich von etwa 20% zu senken, was einen gewissen Kraftstoffmehrverbrauch mit sich bringt, der aber während der kurzen Warmlaufphase in Kauf genommen wird. Begrenzend für die Spätverstellung der Zündung sind die zyklischen Schwankungen.

Es ist die Aufgabe der vorliegenden Erfindung, während der Start- und Warmlaufphase bei direkteinspritzenden gedrosselten Otto-Brennkraftmaschinen die Emissionen weiter zu verringern.

Erfindungsgemäß wird dies durch die Merkmale von Anspruch 1 erreicht.

Es hat sich gezeigt, daß durch eine Verlagerung des Einspritzbeginnes für den Kraftstoff nach "spät" sowohl die NOₓ-Emissionen als auch die HC-Emissionen bedeutend gesenkt werden können. Dadurch kommt es zu einer Verzögerung der Verbrennung, was einerseits zu niedrigeren Verbrennungsspitzentemperaturen, andererseits zu höheren Verbrennungsendtemperaturen führt. Durch die deutliche Reduzierung der Verbrennungsspitzentemperaturen wird die Entstehung von NOₓ-Emissionen behindert. Andererseits begünstigt die verzögerte Verbrennung durch die höheren Temperaturen am Verbrennungsende die Oxidation der Kohlenwasserstoffe, was sich vorteilhaft auf die HC-Emissionswerte auswirkt. Der Beginn der Einspritzung wird dabei auf einen Zeitpunkt etwa zwischen 160° Kurbelwinkel vor dem oberen Totpunkt und 70° Kurbelwinkel vor dem oberen Totpunkt eingestellt. Zusätzlich bringt die höhere Temperatur des Verbrennungsgases eine kürzere Warmlaufphase, da das "Anspringen" des Katalysators deutlich verkürzt wird.

Die Einspritzmenge wird während der Start- und Warmlaufphase bei gedrosseltem Motor so gewählt, daß das Gesamtluftverhältnis λ = 1 oder leicht mager ist.

Es hat sich gezeigt, daß bei der erfindungsgemäßen Einstellung des Einspritzbeginnes zwar die NOₓ- und HC-Emissionen drastisch sinken, dabei aber die Rußemissionen ansteigen können. Um letzteres zu vermeiden, ist in Weiterbildung der Erfindung vorgesehen, daß vor und/oder während der Verbrennung ein hohes Turbulenzniveau der Zylinderinnenströmung erzeugt wird. Turbulenzbildende Maßnahmen sind bekannt und können - beispielsweise gemäß der EP 0 598 941 B1 oder der EP 0 741 237 A1 - durch die Form der Kolbenmulde und/oder durch besondere Einlaßkanalgestaltung erreicht werden. Weiters ist es zur Verminderung der Rußemissionen vorteilhaft, wenn nach der Kraftstoffeinspritzung eine Ladungsschichtung erzeugt wird. Ladungsschichtungsbildende Maßnahmen sind ebenfalls beispielsweise aus den genannten Druckschriften bekannt.

Die Erfindung wird anhand der Diagramme näher erläutert.

Es zeigen:
- Fig. 1a: ein Zylinderdruck-Kurbelwinkel-Diagramm,
- Fig. 1b: ein Ventilhub-Kurbelwinkel-Diagramm, Fig. 1c ein Einspritzzeitpunkt-Diagramm,
- Fig. 2: ein Wärmefreisetzungs-Kurbelwinkel-Diagramm,
- Fig. 3: ein HC-Kraftstoffverbrauchs-Diagramm und
- Fig. 4: ein NOₓ-Kraftstoffverbrauchs-Diagramm.

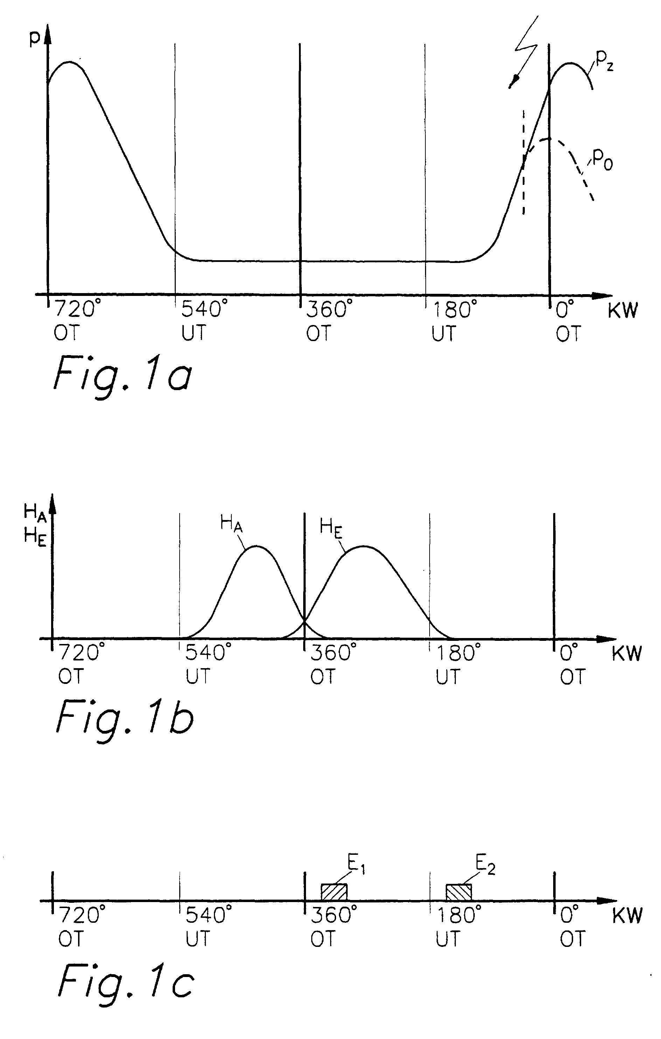

Fig. 1 a zeigt den Zylinderdruck p über dem Kurbelwinkel KW aufgetragen, wobei die Linie p_{z} den Zylinderdruck mit Zündung und pₒ den Zylinderdruck ohne Zündung bedeutet. In Fig. 1b sind die Ventilhübe H_{E} bzw. H_{A} für Einlaß- bzw. Auslaßventil dargestellt. Fig. 1c zeigt den Einspritzbeginn der Kraftstoffeinspritzung über dem Kurbelwinkel KW. Bei konventionellen direkteinspritzenden Otto-Brennkraftmaschinen bei homogenem Betrieb liegt der Einspritzbeginn E₁ meist im Bereich nach dem Schließzeitpunkt des Auslaßventiles, etwa bei 320° Kurbelwinkel KW vor dem oberen Totpunkt OT. Gemäß der Erfindung wird der Einspritzbeginn E₂ dagegen in die Kompressionsphase, beispielsweise etwa in den Bereich des Schließzeitpunktes des Einlaßventiles und später, gelegt.

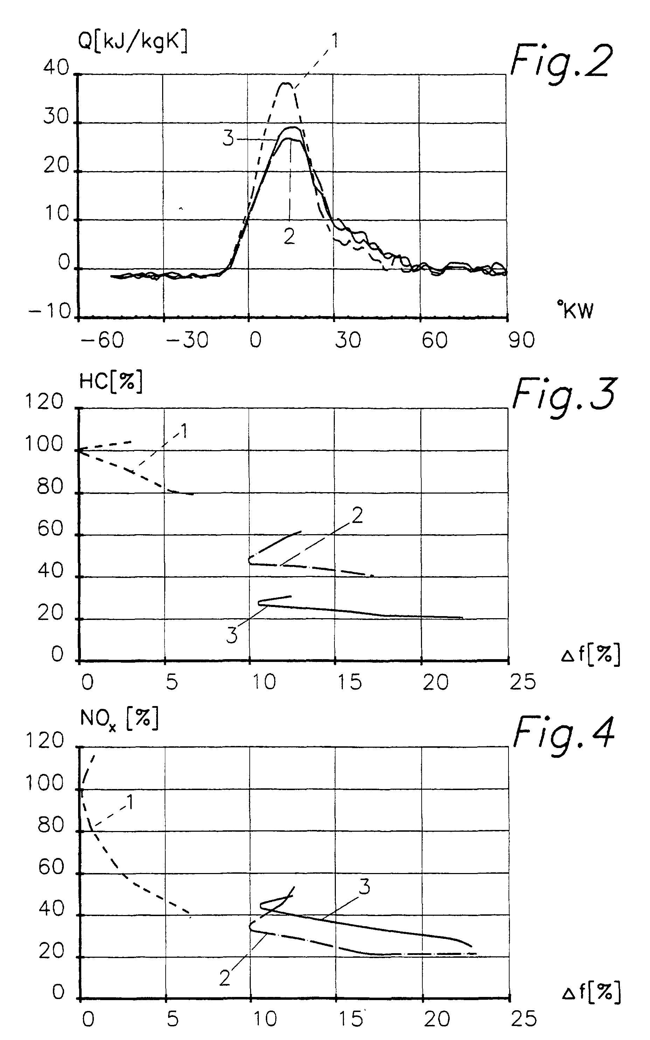

In den Fig. 2 bis 4 zeigt jeweils die Linie 1 einen Einspritzbeginn von 320° Kurbelwinkel KW vor dem oberen Totpunkt OT, eine Einstellung, wie sie bei bekannten direkteinspritzenden Otto-Brennkraftmaschinen verwendet wird. Die Linie 2 zeigt eine Einspritzbeginneinstellung von 130° Kurbelwinkel KW vor dem oberen Totpunkt OT gemäß einem ersten Ausführungsbeispiel der vorliegenden Erfindung, die Linie 3 zeigt einen Einspritzbeginn von 110° Kurbelwinkel KW vor dem oberen Totpunkt OT gemäß einem zweiten Ausführungsbeispiel der vorliegenden Erfindung.

In Fig. 2 ist die Wärmefreisetzung Q über dem Kurbelwinkel KW aufgetragen. Deutlich ist zu erkennen, daß der Wärmefreisetzungsspitzenwert für die die Ausführungsbeispiele der vorliegenden Erfindung repräsentierenden Kurven 2 und 3 deutlich unter dem Spitzenwert der Linie 1 liegt. Dadurch kommt es zu wesentlich geringeren Spitzentemperaturen während der Verbrennung. Andererseits ist die Verbrennungsendtemperatur bei den durch die Linien 2 und 3 dargestellten Beispielen aufgrund des verzögertem Verbrennungsendes deutlich höher als bei der in Linie 1 dargestellten, bisher üblichen Einspritzbeginn-Festlegung. Das Gesamtluft-Verhältnis λ beträgt während der Start- und Warmlaufphase etwa den Wert 1, 0 oder ist leicht mager (1,0 ≤ λ ≤ 1,4).

In Fig. 3 sind die relativen Kohlenwasserstoffemissionen HC über dem relativen Kraftstoffmehrverbrauch Δf dargestellt, welcher sich auf eine kraftstoffoptimierte Einspritzbeginneinstellung von 320° Kurbelwinkel KW vor dem oberen Totpunkt OT bei homogenem Mischungsverhältnis und optimalem Zündzeitpunkt bezieht. Die erfindungsgemäß nach "spät" eingestellte Einspritzbeginnfestsetzung bei Ladungsschichtung im Brennraum zeigt, daß bei einer Einspritzbeginnfestlegung von 130° Kurbelwinkel KW vor OT (Linie 3) die HC-Emissionen im kraftstoffoptimalen Punkt um etwa 50%, bei Festsetzung des Einspritzbeginns auf 110° Kurbelwinkel KW vor OT (Linie 2) auf etwa 30% im Vergleich zur üblichen Ausführung gesenkt werden kann. Es kommt zwar bei der erfindungsgemäßen Kraftstoffeinbringung zu einer geringfügigen Erhöhung des Kraftstoffverbrauches △f um etwa 10%, was allerdings nicht von besonderer Bedeutung ist, da sich die Start- und Warmlaufphase des Motors und somit die Zeit des einspritzbeginnbedingten erhöhten Kraftstoffverbrauches auf einen sehr kurzen Zeitraum beschränkt. Nach der Start- bzw. Warmlaufphase wird der Einspritzzeitpunkt für homogenen Betrieb wieder in den Bereich des Einlaßtaktes verschoben.

In Fig. 4 sind die relativen Stickoxidemissionen NOₓ über dem relativen Kraftstoffmehrverbrauch Δf für den in Linie 1 dargestellten konventionellen Einspritzzeitpunkt von 320° Kurbelwinkel KW vor dem oberen Totpunkt OT bei homogenem Gemisch und optimalem Zündzeitpunkt einerseits und die beiden erfindungsgemäßen Ausführungsbeispiele bei geschichtetem Betrieb bei λ = 1 mit einem Einspritzbeginn von 110° Kurbelwinkel vor dem oberen Totpunkt OT (Linie 2) und für den Einspritzbeginn von 130° Kurbelwinkel KW vor dem oberen Totpunkt OT (Linie 3) andererseits dargestellt. Auffallend ist, daß bei einem Einspritzbeginn von 130° KW vor OT (Linie 2) eine größere Reduzierung der NOₓ-Emissionen auf etwa 30 bis 40% im Vergleich zur konventionellen Einspritzbeginnfestlegung zu erreichen ist, als bei der durch Linie 3 dargestellten Ausführung mit einem noch späteren Einspritzzeitpunkt von 110°KW vor OT.

Der Vergleich der Fig. 3 und 4 zeigt, daß die Bestpunkte für HC-Emissionen und NOₓ-Emissionen bei unterschiedlichen Einspritzbeginnen liegen, sodaß bei Optimierung des Einspritzzeitpunktes hinsichtlich NOₓ und HC-Emissionen der Einspritzbeginn zwischen 110° Kurbelwinkel KW und 130° Kurbelwinkel KW also beispielsweise etwa bei 120° Kurbelwinkel KW vor dem oberen Totpunkt OT liegt.

Im Gegensatz zu bekannten geschichteten Direkteinspritzverfahren für Otto-Brennkraftmaschinen mit nahezu ungedrosseltem Schichtbetrieb wird beim erfindungsgemäßen Verfahren die Brennkraftmaschine in der Start- und Warmlaufphase stark gedrosselt und dabei ein geschichtetes, stöchiometrischer Betrieb gefahren, wodurch sich deutliche Emissionsverbesserungen einstellen.

## Patentansprüche

1. Verfahren zur Einbringung von Kraftstoff in den Brennraum einer im Teillastbetrieb gedrosselten direkteinspritzenden Otto-Brennkraftmaschine, wobei während der Start- und/oder Warmlaufphase der gedrosselten Brennkraftmaschine der Einspritzbeginn für den Kraftstoff in den Bereich des Kompressionstaktes verschoben wird, **dadurch gekennzeichnet, dass** der Beginn der Einspritzung während der Start- und/oder Warmlaufphase auf einen Zeitpunkt zwischen 160° Kurbelwinkel (KW) vor dem oberen Totpunkt (OT) und 70° Kurbelwinkel (KW) vor dem oberen Totpunkt (OT) eingestellt wird, und dass die Einspritzmenge während der Start- und Warmlaufphase so gewählt wird, dass ein Gesamtluftverhältnis λ = 1 oder leicht mager erreicht wird.

2. Verfahren nach Anspruch 1, **dadurch gekennzeichnet, dass** vor und/oder während der Verbrennung ein hohes Turbulenzniveau der Zylinderinnenströmung erzeugt wird.

3. Verfahren nach Anspruch 1 oder 2, **dadurch gekennzeichnet, dass** nach der Kraftstoffeinspritzung eine Ladungsschichtung erzeugt wird.

## Claims

1. Method of introducing fuel into the combustion chamber of an internal combustion spark-ignition engine with direct fuel injection, which is throttled during part-load operation, wherein the beginning of fuel injection is shifted into the phase of the compression stroke during starting and/or warm-up, **characterized in that** the beginning of injection is set at a point in time between 160° crank angle (KW) before upper dead centre (OT) and 70° crank angle (KW) before upper dead centre (OT) during starting and/or warm-up and that the injection volume during the starting and warm-up phase is chosen such that the total air ratio λ is 1 or slightly lean.

2. Method as claimed in Claim 1, **characterized in that** a high turbulence level of the internal flow in the cylinder is created before and/or during combustion.

3. Method as claimed in Claim 1 or 2, **characterized in that** charge stratification is induced after fuel injection.

## Revendications

1. Procédé pour introduire du carburant dans la chambre de combustion d'un moteur thermique à essence à injection directe à étranglement, en mode de fonctionnement en charge partielle, selon lequel, pendant la phase de démarrage et/ou de chauffage du moteur thermique, étranglé, on déplace le début de l'injection du carburant dans la zone de la phase de compression,
**caractérisé en ce que**
le début de l'injection pendant la phase de démarrage et/ou de chauffage est réglé à un instant compris entre un angle de 160° du vilebrequin (KW) avant le point mort haut (PMH) et 70° d'angle de vilebrequin (KW) avant le point mort haut (PMH), et
on sélectionne la quantité à injecter pendant la phase de démarrage et de chauffage pour avoir un rapport global d'air λ = 1 ou un rapport légèrement maigre.

2. Procédé selon la revendication 1,
**caractérisé en ce qu'**
avant et/ou pendant la combustion, on génère un niveau de turbulence élevé de la circulation dans le cylindre.

3. Procédé selon l'une quelconque des revendications 1 ou 2,
**caractérisé en ce qu'**
après l'injection de carburant on génère une charge stratifiée.
